# EUROPÄISCHE PATENTSCHRIFT

(11) **EP 0 474 233 B1**
(45) Veröffentlichungstag und Bekanntmachung des Hinweises auf die Patenterteilung: **09.03.1994**
(21) Anmeldenummer: 91115022.5
(22) Anmeldetag: 05.09.1991
(51) Int. Cl.: F16L 55/26, F17D 5/00

(54) **Rohrleitungsmolch für Rohrsysteme**
Pig for pipeline systems
Racleur pour système de tuyaux

(30) Priorität: 07.09.1990 DE 9012809 U; 11.09.1990 DE 4028854
(43) Veröffentlichungstag der Anmeldung: 11.03.1992
(73) Patentinhaber: F.B. LEHMANN Maschinenfabrik GmbH, D-73431 Aalen (DE)
(72) Erfinder: Zoller, Hans, W-7080 Aalen/Württ. (DE)
(74) Vertreter: Kern, Wolfgang, Dipl.-Ing.

(56) Entgegenhaltungen:
- EP-A- 0 076 434
- DE-A- 3 818 246
- FR-A- 2 087 486
- FR-A- 2 638 813
- US-A- 4 422 477

## Beschreibung

Die Erfindung betrifft einen Rohrleitungsmolch zur Entleerung von Rohrsystemen mittels Druckluft oder Treibflüssigkeit mit manuell oder automatisch gesteuerten Molch-Stattionen entlang des Rohrsystems, mit einem länglichen Molchkörper, der zu beiden Seiten eines einen kleineren Durchmesser als der Rohrdurchmesser aufweisenden Teils eine sich ringförmig entlang seinem Außenumfang erstreckende Dichtfläche in Form von austauschbaren Dichtringen aufweist, die mit der Rohrwandung in Berührung steht.

Bei bekannten Rohrleitungsmolchen dieser Art (DE-A-3818246) werden an dem zylinder- oder hantelförmigen Molchkörper unbewegliche Dichtungsringe in Form von Manschetten verwendet, die insbesondere beim Durchgang durch enge Rohrbögen den Molchkörper antreibende Druckluft vorbeiblasen lassen und damit eine stetige Molchbewegung in der Rohrleitung beim Reinigen derselben von einem in ihr geförderten Produkt verhindern.

Bei einem anderen bekannten Rohrbehandlungsgerät (FR-A-2087486) wird anstelle eines starren zylindrischen oder hantelförmigen Körpers, der durch die Rohrleitung hindurchgedrückt bzw. geschoben wird, ein mehrteiliger Körper verwendet, dessen einzelne Teile mittels Gelenken verbunden sind, damit das Gerät leichter und weniger Verschleiß verursachend durch enge Rohrbögen bewegt werden kann. Dieses Gerät weist jedoch keine Dichtungsringe oder -scheiben auf, sondern stattdessen an der Rohrinnenwandung anliegende Räumer, die das durch die Rohrleitung zu fördernde Produkt ausräumen. Dabei kommt es auf eine Abdichtung des Behandlungsgerätes offenbar nicht an.

Allgemein bekannt bei Rohrleitungsmolchen sind Molchgleitflächen, die beim Durchgang durch Rohrbögen mit Krümmungsradien R = 2,5 D ungleich belastet sind, so daß sich die Gleitkanten des Molches rasch abschleifen.

Die Aufgabe der Erfindung besteht somit darin, den Rohrmolch der genannten Art im Hinblick auf seine Abdichtung so zu verbessern, daß auch in engen Rohrbögen die den Molch vorwärtstreibende Druckluft nicht an den Dichtringen vorbeiströmt, so daß verhindert wird, daß das Produkt in der Rohrleitung zum Teil ohne Molchbewegung durch das Rohr hindurchgedrückt wird, bis die vorbeigeströmte Luft, auch Falschluft genannt, den Rohrleitungsauslauf erreicht und mit einer plötzlichen Expansion aus dem Rohr entweicht.

Diese Aufgabe wird erfindungsgemäß dadurch gelöst, daß die Dichtringe Teil zweier beidseitig des länglichen Molchkörpers angeordneter, mit dem Molchkörper gelenkig verbundener Dichtungsscheiben sind und sich selbständig zur Längsachse so einstellen, daß die Abdichtung ständig rechtwinklig zur Rohrlängsachse erfolgt.

Durch die gelenkige Lagerung der Dichtungsscheiben wird erreicht, daß sich die Dichtringe auch in engen Rohrbögen ständig rechtwinklig zur Rohrlängsachse einstellen und dadurch eine im wesentlichen vollständige Abdichtung bewirken, so daß die den Molch treibende Druckluft nicht an den Dichtringen vorbeiströmen kann.

Gemäß einer vorteilhaften Ausgestaltung des Erfindungsvorschlags bestehen die gelenkigen Verbindungen zwischen dem länglichen Molchkörper und den Dichtungsscheiben aus je einem Kugelgelenk, auf dessen Käfig die Dichtungsscheibe befestigt ist und das in der Rohrlängsachse liegt. Die Dichtungsscheibe und ihr Kugelgelank lassen sich gemäß einer weiteren Ausgestaltung auf der Dichtungsscheibenvorderseite zweckmäßigerweise mit einem elastischen Pufferstück zur Abfederung des Rohrleitungsmolches beim Auffahren auf Gegenstände versehen.

Darüberhinaus hat sich als besonders zweckmäßig erwiesen, in der Dichtungsscheibe einen Dauermagneten zur Signalisierung der Molchstellung an der Rohraußenwand vorzusehen.

Der Molchkörper kann entweder mit ringförmig um seinen Umfang angeordneten Gleitflächen oder mit Rollen versehen sein, die mit der Rohrwandung in Berührung stehen. In beiden Fällen ist somit die Abdichtungsfunktion des Molches von seiner Fortbewegungsfunktion getrennt, wodurch die Lebensdauer der Dichtringe vergrößert wird.

Die Erfindung wird nachfolgend anhand der Zeichnung beispeilsweise näher erläutert. In der Zeichnung zeigen:
- Fig. 1: einen Längsschnitt durch einen von dem erfindungsgemäßen Rohrleitungsmolch durchfahrenen Rohrbogen, wobei der Molch teilweise geschnitten ist, und
- Fig. 2: eine der Fig. 1 vergleichbare andere Ausführungsform des Rohrleitungsmolches.

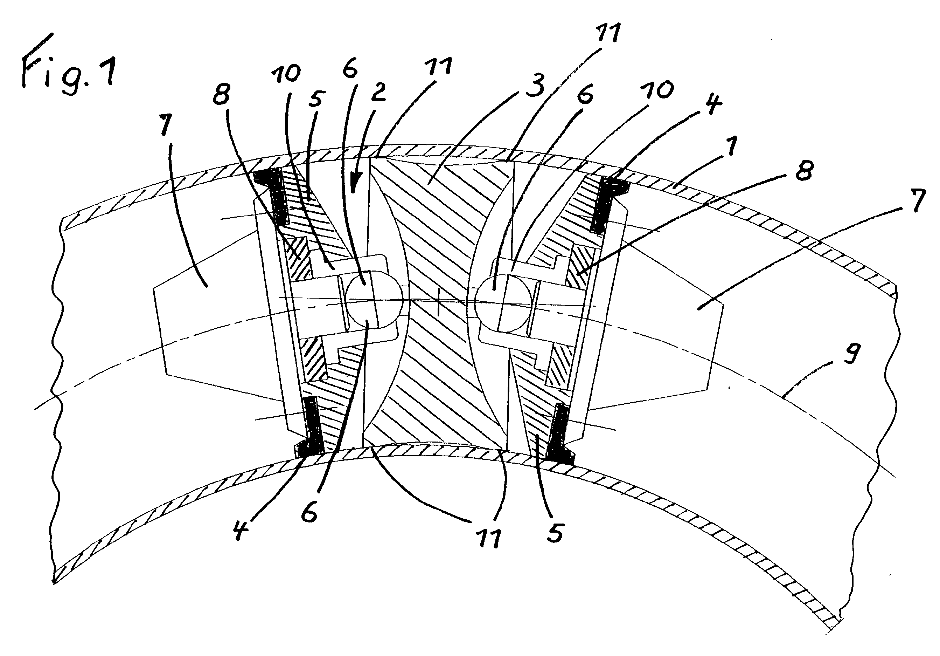

Der in Fig. 1 ganz allgemein mit 2 bezeichnete Rohrleitungsmolch weist einen länglichen Molchkörper 3 auf, der mit Gleitflächen 11 versehen ist, die sich ringförmig um seinen Umfang erstrecken und die Rohrwandung 1 berühren, und an dessen Stirnseite über ein in einem Käfig 10 sitzendes Kugelgelenk 6 eine Dichtungsscheibe 5 in bezug auf den Molchkörper 3 beweglich angebracht ist. Bei den Dichtungsscheiben 5 handelt es sich um rotationssymmetrische Körper kegelstumpfförmiger Konfiguration die sich aufgrund des Kugelgelenkes 6 in bezug auf die Längsachse 9 des Rohres 1, in dem sich der Molch bewegt, selbständig einstellen können. An jeder Dichtungsscheibe 5 ist auf der dem länglichen Molchkörper 3 abgewandten Vorderseite ein kegelförmiges, elastisches Pufferstück 7 zur Abfederung des Molches beim Auffahren auf Gegenstände angebracht.

Rund um den Umfang der Dichtungsscheibe 5 erstreckt sich ein austauschbarer Dichtungsring 4, dessen Dichtflächen auf der Innenwand des Rohres 1 aufgrund der Kugelgelenkverbindung der Dichtungsscheibe 5 mit dem Molchkörper 3 so anliegen, daß die Abdichtung ständig rechtwinkelig zur Längsachse 9 des Rohres erfolgt.

Die Austauschbarkeit der Dichtringe 4 ermöglicht es, diese zu ersetzen, sobald die Dichtflächen verschlissen sind, ohne daß der Rohrmolch in seiner Gesamtheit oder wesentliche Teile von ihm gleichzeitig ausgetauscht werden müssen.

Zwischen der Dichtungsscheibe 5 und dem Pufferstück 7 befindet sich ein ringförmiger Dauermagnet 8, mit Hilfe dessen die Molchstellung innerhalb des Rohres durch die Rohrwand hindurch, die zweckmäßigerweise aus V2a-Stahl besteht, signalisiert werden kann.

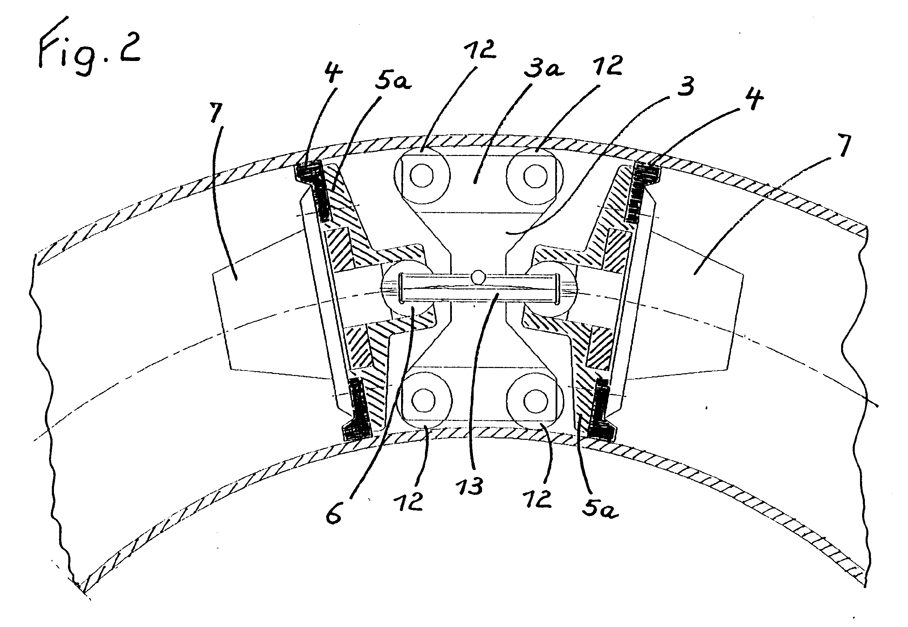

Bei der in Fig. 2 gezeigten Ausführungsform ist der Molchkörper 3a, der ebenso wie bei der Ausführungsform von Fig. 1 als Führungsteil für die beidseitig an ihm gelenkig angebrachten Dichtungsscheiben 5a dient, anstelle der Gleitflächen 11 mit an seinem Umfang verteilt angeordneten Rollen 12 versehen, die auf der Rohrwandung abrollen. Die Verbindung der beiden Dichtungsscheiben wird durch eine Achse 13 hergestellt. Die Dichtungsscheiben 5a sind darüberhinaus so ausgebildet, daß der Käfig für die Aufnahme des Kugelgelenks 6 ein Teil der Dichtungsscheibe selbst ist.

## Patentansprüche

1. Rohrleitungsmolch zur Entleerung von Rohrsystemen mittels Druckluft oder Treibflüssigkeit mit manuell oder automatisch gesteuerten Molch-Stationen entlang des Rohrsystems, mit einem länglichen Molchkörper, der zu beiden Seiten eines einen kleineren Durchmesser als der Rohrdurchmesser aufweisenden Teils eine sich ringförmig entlang seinem Außenumfang erstreckende Dichtfläche in Form von austauschbaren Dichtringen aufweist, die mit der Rohrwandung in Berührung stehen, dadurch **gekennzeichnet,** daß die Dichtringe (4) Teil zweier beidseitig des länglichen Molchkörpers (3, 3a) angeordneter, mit dem Molchkörper gelenkig verbundener Dichtungsscheiben (5, 5a) sind und sich selbständig zur Längsachse (9) so einstellen, daß die Abdichtung ständig rechtwinklig zur Rohrlängsachse erfolgt.

2. Rohrleitungsmolch nach Anspruch 1, dadurch **gekennzeichnet,** daß der Molchkörper (3) mit die Rohrwandung berührenden, ringförmig um seinen Umfang angeordneten Gleitflächen (11) versehen ist.

3. Rohrleitungsmolch nach Anspruch 1, dadurch **gekennzeichnet,** daß der Molchkörper (3a) mit an seinem Umfang verteilt angeordneten Rollen (12) versehen ist, die auf der Rohrwandung abrollen.

4. Rohrleitungsmolch nach einem der Ansprüche 1 bis 3, dadurch **gekennzeichnet,** daß die gelenkige Verbindung zwischen dem länglichen Molchkörper (3) und der Dichtungsscheibe (5) aus einem Kugelgelenk (6) besteht, auf dessen Käfig (10) die Dichtungsscheibe (5) befestigt ist und das in der Rohrlängsachse liegt.

5. Rohrleitungsmolch nach einem der Ansprüche 1 bis 3, dadurch **gekennzeichnet,** daß die gelenkige Verbindung zwischen dem länglichen Molchkörper (3a) und der Dichtungsscheibe (5a) aus einem Kugelgelenk (6) besteht, dessen Käfig Teil der Dichtungsscheibe (5a) ist.

6. Rohrleitungsmolch nach einem der Ansprüche 1 bis 5, dadurch **gekennzeichnet,** daß die Dichtungsscheibe (5, 5a) sowie ihr Kugelgelenk (6) auf der Dichtungsscheibenvorderseite mit einem elastischen Pufferstück (7) zur Abfederung des Rohrleitungsmolches beim Auffahren auf Gegenstände versehen ist.

7. Rohrleitungsmolch nach einem der Ansprüche 1 bis 6, dadurch **gekennzeichnet,** daß sich im Molchkörper (3, 3a) wenigstens ein Dauermagnet (8) zur Signalisierung der Molchstellung an der Rohraußenwand (1) befindet.

8. Rohrleitungsmolch nach Anspruch 7, dadurch **gekennzeichnet,** daß der Dauermagnet (8) in der Dichtungsscheibe (5, 5a) angeordnet ist.

## Claims

1. Pig for emptying pipeline systems by means of pressurized air or driving liquid, comprising manually or automatically controlled pig stations along the pipeline system, which pig is provided with a long pig body having at both sides of a portion provided with a smaller diameter as the pipeline diameter a sealing area in form of exchangable sealing rings extending annularly along its periphery, which sealing rings are engaged with the tube wall, **characterized** in that the sealing rings (4) are part of two sealing discs (5, 5a) being arranged at both sides of the long pig body (3, 3a) and pivotally connected to the pib body and which are self adjusting with respect to the longitudinal axis (9) so that the seal is always functioning rectangularly to the longitudinal axis of the tube.

2. Pig for pipeline systems according to claim 1, **characterized** in that the pig body (3) is provided with sliding surfaces (11) contacting the tube wall and extending annularly around its periphery.

3. Pig for pipeline systems according to claim 1, **characterized** in that the pig body (3a) is provided with rolls (12) being distributed at its periphery and running on the tube wall.

4. Pig for pipeline systems according to one of the claims 1 through 3, **characterized** in that the pivotal connection between the long pig body (3) and the sealing disc (5) forms a spherical pivot (6) on the cage (10) thereof, the sealing disc (5) is fastened and which is located on the longitudinal axis of the tube.

5. Pig for pipeline systems according to one of the claims 1 through 3, **characterized** in that the pivotal connection between the long pig body (3a) and the sealing disc (5a) forms a spherical pivot (6), the cage thereofbeing part of the sealing disc (5a).

6. Pig for pipeline systems according to one of the claims 1 through 5, **characterized** in that the sealing disc (5, 5a) as well as the spherical pivot (6) are provided on the front side of the sealing disc with an elastical buffer piece (7) for the elastic rebound of the pig during its run against objects.

7. Pig for pipeline systems according to one of the claims 1 through 6, **characterized** in that the pig body (3, 3a) is inside provided with at least one permanent magnet (8) for signaling the location of the pig at the outside of the tube wall (1).

8. Pig for pipeline systems according to claim 7, **characterized** in that the permanent magnet (8) is located within the sealing disc (5, 5a).

## Revendications

1. Racleur pour tuyauterie, destiné à vider des systèmes de tuyaux au moyen d'air comprimé ou de liquide de propulsion, comportant le long du système de tuyaux des postes à racleur, commandés manuellement ou automatiquement, comportant un corps de racleur allongé qui présente, de part et d'autre d'une partie présentant un plus petit diamètre que le diamètre du tuyau, une surface d'étanchéité s'étendant annulairement le long de sa périphérie extérieure et en forme de bagues d'étanchéité remplaçables qui sont en contact avec la paroi du tuyau, caractérisé en ce que les bagues d'étanchéité (4) font partie de deux disques d'étanchéité (5, 5a) disposés de part et d'autre du corps de racleur allongé (3, 3a) et assemblés de façon articulée au corps de racleur et en ce qu'elles s'ajustent d'elles-mêmes par rapport à l'axe longitudinal (9) de façon que l'étanchéité se produise constamment perpendiculairement à l'axe longitudinal du tuyau.

2. Racleur pour tuyauterie selon la revendication 1, caractérisé en ce que le corps de racleur (3) est pourvu de surfaces de glissement (11) qui sont en contact avec la paroi du tuyau et qui sont disposées en forme d'anneaux à la périphérie de ce corps.

3. Racleur pour tuyauterie selon la revendication 1, caractérisé en ce que le corps de racleur (3a) est pourvu de rouleaux (12) qui sont disposés de façon répartie à sa périphérie et qui roulent sur la paroi du tuyau.

4. Racleur pour tuyauterie, selon l'une des revendications 1 à 3, caractérisé en ce que l'assemblage articulé entre le corps de racleur allongé (3) et le disque d'étanchéité (5) est constitué d'une articulation à rotule (6) sur la cage (10) de laquelle est fixé le disque d'étanchéité (5) et qui est située dans l'axe longitudinal du tuyau.

5. Racleur pour tuyauterie, selon l'une des revendications 1 à 3, caractérisé en ce que l'assemblage articulé entre le corps de racleur allongé (3a) et le disque d'étanchéité (5a) est constitué d'une articulation à rotule (6) dont la cage fait partie du disque d'étanchéité (5a).

6. Racleur pour tuyauterie, selon l'une des revendications 1 à 5, caractérisé en ce que le disque d'étanchéité (5, 5a) ainsi que son articulation à rotule (6) sont pourvus, sur la face antérieure du disque d'étanchéité, d'un élément d'amortissement élastique (7) pour la suspension élastique du racleur de tuyauterie quand celui-ci heurte des objets.

7. Racleur pour tuyauterie selon l'une des revendications 1 à 6, caractérisé en ce qu'il y a dans le corps de racleur (3, 3a), au moins un aimant permanent (8) destiné à signaler sur la paroi extérieure du tuyau la position du racleur.

8. Racleur pour tuyauterie selon la revendication 7, caractérisé en ce que l'aimant permanent (8) est monté dans le disque d'étanchéité (5, 5a).
